# EUROPEAN PATENT APPLICATION

(11) **EP 4 435 425 A1**
(43) Date of publication of application: **25.09.2024**
(21) Application number: 23163547.5
(22) Date of filing: 22.03.2023
(51) Int. Cl.: G01N 27/30, G01N 27/333, G01N 27/36, G01N 27/404, G01N 27/416, G01N 27/403, G01N 27/413

(54) **ELECTROCHEMICAL PROCESS MEASUREMENT ARRANGEMENT**

(71) Applicant: Hach Lange GmbH, 14163 Berlin (DE)
(72) Inventor: GOLITZ, Andreas, 14163 Berlin (DE); BATTEFELD, Manfred, 14163 Berlin (DE); DE HEIJ, Bas, 14163 Berlin (DE); HEUWOLD, Maik, 14163 Berlin (DE); KUSSMANN, Michael, 14163 Berlin (DE); JONAK, Andreas, 14163 Berlin (DE)
(74) Representative: terpatent PartGmbB

(57) **Abstract**

The invention refers to an electrochemical process measurement arrangement (10) with a process sensor unit (30), the sensor unit (30) comprising a reference electrolyte tank (50) with a reference electrolyte liquid (52) and a reference electrode (54), and a measurement electrolyte tank (60) with a measurement electrolyte liquid (62), a measurement electrode (64), a gas-selective membrane (90) separating the reference electrolyte liquid (52) from a sample liquid (13') and a pressure balance channel (84) fluidically connecting the tank interior (56) with the atmosphere (11).

The pressure balance channel (84) is defined by a balance channel body (80) made of a hydrophobic material having a contact angle Theta higher than 90°.

This allows to realize a very narrow pressure balance channel without the danger of being clogged by electrolyte droplets, so that the evaporation loss of the measurement electrolyte is significantly reduced.

## Description

The invention refers to an electrochemical process measurement arrangement comprising an electrochemical process sensor unit.

A typical electrochemical process measurement arrangement is provided for quasi-continuously determining an analyte, for example the ammonium concentration, in water and comprises a pH electrode arrangement with a pH electrode part and a reference electrode part. The pH electrode part comprises a measurement electrolyte tank with a measurement electrolyte liquid, a measurement electrode being immersed into the measurement electrolyte liquid, and a pH glass membrane separating the measurement electrolyte from the reference electrolyte. The reference electrode part comprises a reference electrolyte tank with a reference electrolyte liquid and a reference electrode immersed into the reference electrolyte liquid, and a gas-selective membrane separating the reference electrolyte liquid from the sample liquid.

The gas-selective membrane is very thin and therefore very sensible to pressure differences between the proximal side and the distal side of the membrane, i.e. between the reference electrolyte tank interior and the sample liquid adjacent to the gas-selective membrane at the outside of the membrane. The more transmissive the gas-selective membrane should be for the gas-ions in question, the thinner and the more fragile is the membrane for pressure differences across the membrane. Highly sophisticated embodiments of gas-selective membranes can be disturbed or damaged at differential-pressures above 1.0 mbar.

Therefore, the reference electrode part is provided with a pressure balance channel fluidically connecting the gas volume within the reference electrolyte tank with the surrounding atmosphere. However, the cross-sectional area of the pressure balance channel needs to be large enough to avoid droplets completely blocking the cross-sectional area of the pressure balance channel. The liquid droplets result from condensing humidity of the outside atmospheric air or of the reference electrolyte liquid within the reference electrolyte tank.

The reference electrolyte liquid constantly evaporates through the pressure balance channel, so that the reference electrolyte liquid typically is exhausted after an exhaustion interval of a few weeks. This effect is even stronger if the process sensor unit is provided with an electrical heating for constantly tempering the electrolyte liquids at, for example 45°C, to guarantee relatively short reaction times and constant basic conditions independent of the environmental temperature.

It is an object of the invention to provide an electrochemical process measurement arrangement with a reduced evaporation of the reference electrolyte liquid.

This object is achieved with an electrochemical process measurement arrangement with the features of claim 1.

The electrochemical process measurement arrangement according to the invention is provided with an electrochemical process sensor unit comprising a measurement electrolyte liquid, a measurement electrode being submerged at least in part into the measurement electrolyte liquid, and a pH glass membrane separating the measurement electrolyte liquid from the reference electrolyte liquid.

The process sensor also comprises a separate reference electrolyte tank comprising a reference electrolyte liquid, a reference electrode being in part submerged into the reference electrolyte liquid, and a gas-selective membrane separating the reference electrolyte liquid within the reference electrolyte tank from a sample liquid outside of the reference electrolyte tank. Preferably, the gas-selective membrane is defined by membrane body having a thickness of less than 250 µm. A gas-selective membrane of less than 250 µm thickness is highly transmissive for the gas ions in question so that the reaction time of the process sensor unit is very short.

The reference electrolyte tank is also provided with a pressure balance channel fluidically connecting the tank interior of the reference electrolyte tank with the surrounding atmosphere. The pressure balance channel guarantees that the fluid pressure in the reference tank interior is the atmospheric pressure. As a result, the differential pressure across the gas-selective membrane is very low so that the gas-selective membrane cannot be disturbed or damaged because of a too high differential pressure across the gas-selective membrane.

The pressure balance channel is defined by a balance channel body made of a hydrophobic material having a water contact angle Theta being higher than 90°, preferably having a water contact angle Theta being higher than 150°. Preferably, the balance channel body is made of a flour-based polymer, for example is made of FEP or of PTFE, also known as Teflon.

The internal balance channel wall defined by the balance channel body has a hydrophobic surface so that the specific adhesive forces of a liquid droplet within the pressure balance channel are significantly reduced compared to a hydrophilic channel surface. As a consequence, the cross-sectional area of the pressure balance channel can be designed to be very small, preferably less than 1.0 mm². The effective evaporation loss of the reference electrolyte liquid substantially depends on the cross-sectional area of the pressure balance channel. Since the cross-sectional area of the pressure balance channel is very small, the effective evaporation through the pressure balance channel is substantially reduced. Consequently, the reference electrolyte liquid exhaustion interval is significantly extended up to the factor 2.0, or even more.

According to a preferred embodiment, the pressure balance channel has a ratio R of the balance channel length to the balance channel cross-sectional area of more than 2.5, preferably of more than 5.0. In other words, the balance channel is relatively long in relation to its cross-sectional area. The use of a hydrophobic material for the pressure balance channel allows to minimize the cross-sectional area of the balance channel. As a result, relatively small temperature changes of the gas volume within the reference electrolyte tank cause a relatively extensive oscillating gas movement in the pressure balance channel so that even small temperature changes cause a discharge of humidity from the reference electrolyte tank to the atmospheric environment. The longer the pressure channel is, the less is the effective evaporation loss, so that increasing the longitudinal extension of the pressure balance channel compensates the negative effect of a very small cross-sectional area.

Preferably, a sample container with the sample liquid is provided, wherein the process sensor unit extends into the interior of the sample container so that the gas-selective membrane is submerged in the sample liquid. Preferably, the liquid level of the sample liquid within the sample container is substantially at the same vertical level as the liquid level of the reference electrolyte liquid in the reference electrolyte tank, so that the hydraulic pressure difference across the gas-selective membrane is substantially close to zero.

Preferably, the sample container is provided fluidically open to the atmosphere so that the gas pressure at the surface of the sample liquid and at the surface of the reference electrolyte liquid is identical.

Preferably, a sensor unit heating is provided for heating the process sensor unit. More preferably, the sensor unit is provided with a temperature sensor and with a temperature control including a set temperature memory. The temperature control controls the temperature of the process sensor unit, and in particular controls the temperature of the electrolyte liquids to provide perfectly constant conditions for the determination of the analyte concentration.

Preferably, the set temperature memorized in the set temperature memory is at least 40°C, and more preferably is about 45°C. A relatively high process sensor temperature guarantees a relatively fast reaction time and also guarantees that in an environment where occasionally environmental temperatures of above 30°C can appear, the process sensor temperature cannot rise to a temperature above the process sensor set temperature. A cooling device for occasionally cooling the process sensor unit is not necessary.

Preferably, the sensor unit heating is directly attached to the sample container so that the housing of the sample container, and/or the reference electrolyte tank and/or the measurement electrolyte tank is/are directly heated by the sensor unit heating. This allows a sensible and precise control of the process sensor unit temperature.

Preferably, the sensor unit is provided with a reference electrolyte tank cap, wherein the balance channel body defining the pressure balance channel is a separate but an integral part of the reference electrolyte tank cap. More preferably, the reference electrolyte tank cap is defined by a tank cap body made of plastic being non-hydrophobic. In other words, the reference electrolyte tank cap is made of two different materials, so that the massive tank cap body material can be perfectly adapted to its mechanical function.

One embodiment of the invention is described with reference to the enclosed drawings, wherein:
Figure 1 schematically shows an electromechanical process measurement arrangement with a process sensor unit,
figure 2 schematically shows in detail the process sensor unit of figure 1 including an electrochemical measurement probe and a sample container in a vertical cross-section, and

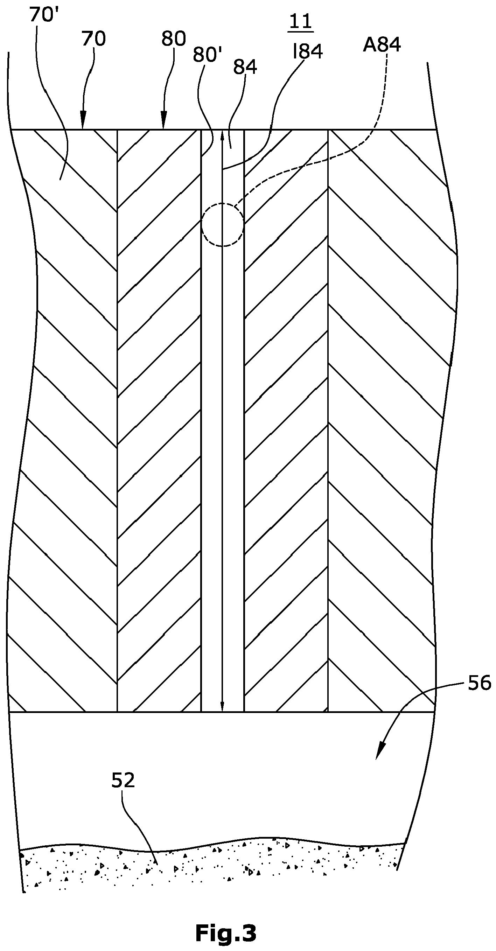

figure 3 shows an enlarged view of an electrolyte tank cap body including a pressure balance cannel and covering a reference electrolyte tank of the process sensor unit of figures 1 and 2.

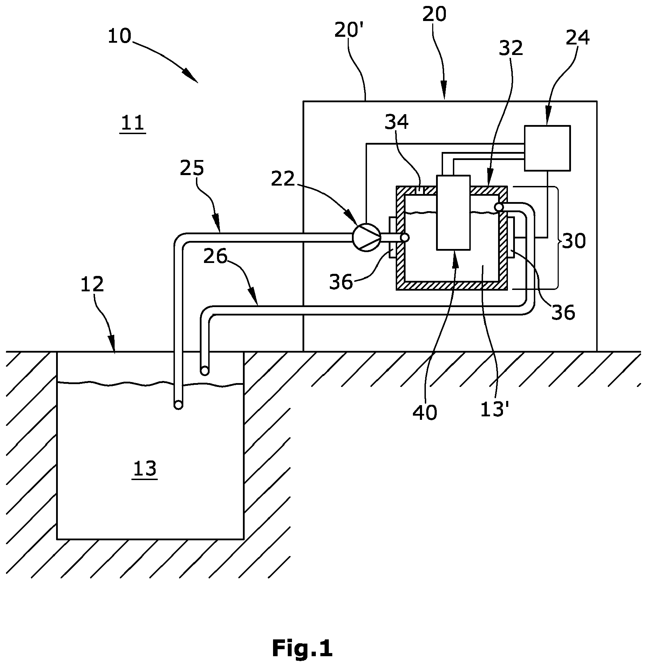

Figure 1 shows an electrochemical process measurement arrangement 10 comprising a stationary sample water basin 12 with sample water 13, and comprising a land-based process analyzer station 20. The process analyzer station 20 comprises, within an analyzer housing 20', a sample pump 22, a process sensor unit 30 and an analyzer control 24 including a sensor unit temperature control 28.

The sample water basin 12 can be a part of a water treatment plant, and the process sensor unit 30 can be adapted to determine the concentration of ammonium of the sample water 13. The sample pump 22 continuously pumps sample water 13 from the sample water basin 12 to the process sensor unit 30 through a feed line 25. The sample water 13 flows through a sample inlet opening 25' into a sample container 32 of the process sensor unit 30, and continuously flows from the sample container 32 through an outlet opening 26' and via a return line 26 back into the sample water basin 12, so that the container sample water 13' is continuously mixed with fresh basin sample water 13. The sample container 32 is substantially defined by a sample container housing 32'. The sample container interior is vented through a sample container venting opening 34 to the atmosphere 11, so that the pressure of the air cushion 35 above the sample container water 13' is always equal to the atmospheric pressure of the environment.

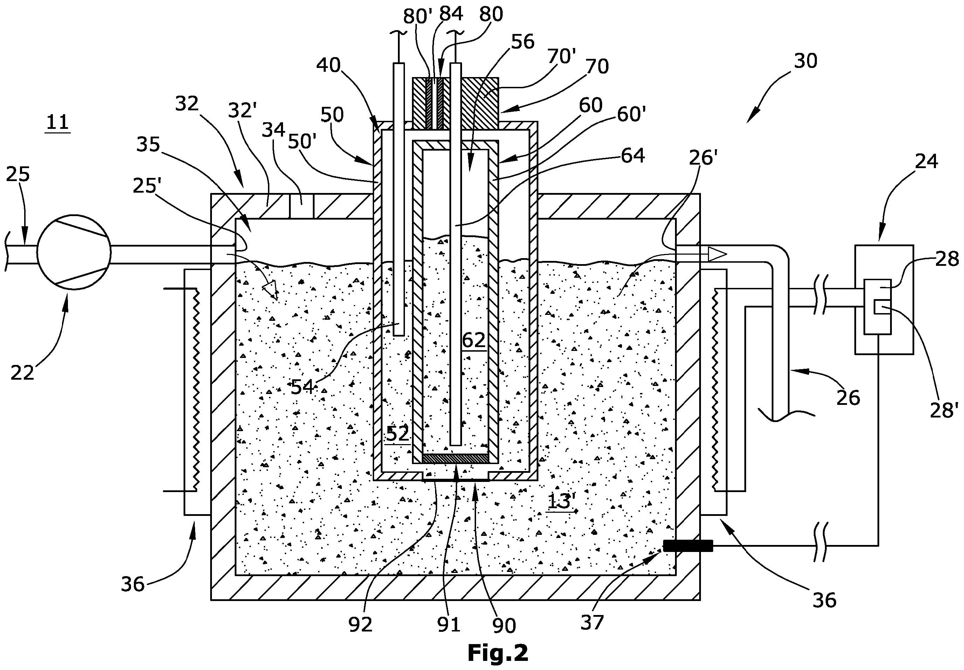

The process sensor unit 30 is shown in more detail in figure 2: The process sensor unit 30 comprises an electrochemical measurement probe 40 comprising a ring-like reference electrolyte tank 50 and a central measurement electrolyte tank 60 surrounded by the reference electrolyte tank 50.

The measurement electrolyte tank 60 is defined by a substantially cylindrical main tank housing 60' made of glass. The main tank housing 60' is closed at the bottom by a pH glass membrane 91.

The reference electrolyte tank 50 is defined by a reference tank housing 50' which encloses a ringlike tank interior with a reference electrolyte liquid 52 and with a reference electrode 54 immersed, in part, into the reference electrolyte liquid 52. The reference electrolyte tank 50 is closed at the bottom by a gas selective membrane 90 and at the top by a separate reference electrolyte tank cap 70. The gas-selective membrane 90 is defined by a thin membrane body 92 having a thickness of less than 200 µm, so that the membrane body 92 is mechanically very fragile. The interior 56 of the reference electrolyte tank 50 is filled with a suitable reference electrolyte liquid 52, whereas a gas cushion is present above the surface of the reference electrolyte liquid 52.

The electrochemical measurement probe 40 defines a typical pH probe and is used, in the present embodiment, to determine the concentration of ammonium in the sample water 13'.

The reference electrolyte tank cap 70 comprises a main tank cap body 70' made of a non-hydrophobic plastic and a separate hollow-cylindrical balance channel body 80 defining a vertical pressure balance channel 84. The balance channel body 80 is made of PTFE (polytetrafluoroethylene) so that the channel surface 80' of the pressure balance channel 84 is hydrophobic and has a contact angle Theta with water of about 126°.

The cylindrical pressure balance channel 84 has a diameter of 1.0 mm, so that the cross-sectional balance channel area A84 is about 0.80 mm², and has a length L84 of 7.5 mm. The ratio R of the balance channel length l84 to the balance channel cross-sectional area A84 is about 9.5.

The process sensor unit 30 is provided with an electric sensor unit heating 36 directly attached to and directly heating the sample container 32, and is provided with a temperature sensor 37 directly sensing the temperature of the sample water 13' within the sample container 32. The electric heating 36 and the temperature sensor 37 are electrically connected to the analyzer control 24 comprising the temperature control 28 which includes a set temperature memory 28'. The set temperature TS memorized in the set temperature memory 28' is 45°C. The temperature control 28 controls the sensor unit heating 36 to keep the temperature of the sample water 13' and, in particular, to keep the temperature of the probe 40 including the electrolyte liquids 52, 62 constantly at the set temperature TS of 45°C. The heating and the temperature control can alternatively be realized in another suitable way.

## Claims

1. An electrochemical process measurement arrangement (10) with a process sensor unit (30), the process sensor unit (30) comprising a reference electrolyte tank (50) with a reference electrolyte liquid (52) and a reference electrode (54), and
a measurement electrolyte tank (60) comprising electrolyte liquid (62), a measurement electrode (64), a gas-selective membrane (90) separating the reference electrolyte liquid (52) from a sample liquid (13'), and a pressure balance channel (84) fluidically connecting the tank interior (56) of the reference electrolyte tank (50) with the atmosphere (11),
whereby the pressure balance channel (84) is defined by a balance channel body (80) made of a hydrophobic material having a contact angle Theta higher than 90°.

2. The electrochemical process measurement arrangement (10) of claim 1, wherein the contact angle Theta is higher than 115°, and is preferably higher than 122°.

3. The electrochemical process measurement arrangement (10) of one of the preceding claims, wherein the balance channel body (80) is made of a flour-based polymer.

4. The electrochemical process measurement arrangement (10) of one of the preceding claims, wherein the pressure balance channel (84) has a ratio R of the balance channel length (l84) to the balance channel cross-sectional area (A84) being higher than 2.5, preferably higher than 5.0.

5. The electrochemical process measurement arrangement (10) of one of the preceding claims, wherein the balance channel cross-sectional area (A84) is less than 1.0 mm².

6. The electrochemical process measurement arrangement (10) of one of the preceding claims, wherein the gas-selective membrane (90) is defined by a membrane body (92) having a thickness of less than 250 µm.

7. The electrochemical process measurement arrangement (10) of one of the preceding claims, comprising a sample container (32) with the sample liquid (13'), wherein the process sensor unit (30) extends into the interior (35) of the sample container (32), so that the gas-selective membrane (90) is submerged in the sample liquid (13').

8. The electrochemical process measurement arrangement (10) of one of the preceding claims, wherein a sensor unit heating (36) is provided for heating the process sensor unit (30).

9. The electrochemical process measurement arrangement (10) of the preceding claim, wherein the process sensor unit (30) is provided with a temperature sensor (37) and wherein a temperature control (28) including a set temperature memory (28') is provided for controlling the sensor unit temperature at a constant set temperature (TS) memorized in the set temperature memory (28').

10. The electrochemical process measurement arrangement (10) of the preceding claim, wherein the set temperature (TS) memorized in the set temperature memory (28') is at least + 40°C.

11. The electrochemical process measurement arrangement (10) of one of the preceding claims 8 to 10, wherein the sensor unit heating (36) is directly attached to the sample container (32).

12. The electrochemical process measurement arrangement (10) of one of the preceding claims 7 to 11, wherein the sample container (32) is provided fluidically open to the atmosphere (11).

13. The electrochemical process measurement arrangement (10) of one of the preceding claims, wherein the process sensor unit (30) is provided with a reference electrolyte tank cap (70) and wherein the balance channel body (80) is a separate but integral part of the measurement electrolyte tank cap (70).

14. The electrochemical process measurement arrangement (10) of the preceding claim, wherein the reference electrolyte tank cap (70) is provided with a tank cap body (70') made of plastic being non-hydrophobic.
